# EUROPEAN PATENT SPECIFICATION

(11) **EP 3 948 459 B1**
(45) Date of publication and mention of the grant of the patent: **20.09.2023**
(21) Application number: 19715449.5
(22) Date of filing: 01.04.2019
(51) Int. Cl.: G05B 23/02

(54) **ASSET CONDITION MONITORING METHOD WITH AUTOMATIC ANOMALY DETECTION**
VERFAHREN ZUR ZUSTANDSÜBERWACHUNG VON ASSETS MIT AUTOMATISCHER ANOMALIEDETEKTION
PROCÉDÉ DE SURVEILLANCE DE CONDITION AVEC DÉTECTION D'ANOMALIE AUTOMATIQUE

(43) Date of publication of application: 09.02.2022
(73) Proprietor: ABB Schweiz AG, 5400 Baden (CH)
(72) Inventor: KLOEPPER, Benjamin, 68199 Mannheim (DE); SCHLAKE, Jan-Christoph, 64293 Darmstadt (DE); SCHMIDT, Benedikt, 69117 Heidelberg (DE); WULLT, Bernhard, 722 14 Västerås (SE); RONQUIST, Anton, 702 10 Örebro (SE)
(74) Representative: Maiwald GmbH
(86) International application number: PCT/EP2019/058178
(87) International publication number: WO 2020/200412

(56) References cited:
- US-A1- 2012 053 984
- US-A1- 2013 204 808
- US-A1- 2016 371 584

## Description

### FIELD OF THE INVENTION

The invention relates to an asset condition monitoring method as well as a device configured to execute such a method.

### BACKGROUND OF THE INVENTION

Often, condition monitoring systems are set up during the commissioning phase of an asset and are seldom updated during the operation of the asset.

Traditionally, condition monitoring systems are tightly coupled to an asset, for example an industrial robot. Often, the condition monitoring logic is implemented on the local controller. Then, the condition of the asset is presented locally to the user in form of a traffic light system or a KPI. Sometimes, these KPIs are transferred to a central local, e.g. for report generation or to be used by service engineers.

Condition monitoring systems are often static and do not adapt themselves to given conditions over time like use, environment, system and/or application.

US 2016/371584 A1 describes a local analytics at an asset.

US 2012/053984 A1 describes a risk management system for use with service agreements.

US 2013/204808 A1 describes fault prediction of monitored assets.

### DESCRIPTION OF THE INVENTION

It is therefore an objective of the invention to provide an improved asset condition monitoring method. This objective is achieved by the subject-matter of the independent claims.

Further preferred embodiments are evident from the dependent patent claims.

According to the invention an asset condition monitoring method with automatic anomaly detection is provided, comprising the steps:
receiving local condition data from an asset fleet, relating to a plurality of assets; wherein the local condition data relate to a condition of an asset of the asset fleet, wherein the local condition data comprise time series data of the condition of the asset of the asset fleet;
identifying at least one anomaly in the received local condition data, wherein the identified anomaly relates to unexpected condition data of the asset, wherein the anomaly is identified by an anomaly detection method, which is configured for processing the time series data comprising running a generic test that identifies the anomaly;
identifying a new potential failure case, relating to a new failure in an asset, dependent on the determined anomaly and additional system data provided by the respective asset;
determining a specific condition model dependent on the identified potential failure case, wherein the specific condition model is configured for predicting the new failure; and
providing the specific condition model to the plurality of assets and/or to digital models of the plurality of assets.

Preferably, the asset fleet relates to a plurality of assets. The asset fleet is preferably determined by a type of asset, a customer, an application of the asset fleet, a configuration of the asset fleet, an operation cycle of the asset fleet, a software version of the asset fleet and/or a location of the different assets. A digital model of an asset relates to a digital twin of the asset. Thereby, one asset can relate to a plurality of asset fleets.

The term "asset", as used herein, comprises any asset, which is suitable to form a fleet, preferably robots, in particular industrial robots, motors, generators and/or pumps.

The term "local condition data", as used herein, relates to a condition and/or health state of an asset and/or a asset fleet. Additionally, the local condition data preferably comprises time series data of the condition and/or health state of an asset and/or an asset fleet.

The term "specific condition model", as used herein, is also referred to as predictor since the specific condition model is configured for predicting a new, to this moment unknown, potential failure case. For example, given that the asset is an industrial robot, a new potential failure relates to a new failure in axis 3. The specific condition model is then configured to predict such new failure in axis 3 for condition monitoring of the asset.

Preferably, the received local condition data is stored on a cloud service. If the asset fleet is restricted to one location, a cloud service is not necessary, nevertheless may relieve the computational burden from a local infrastructure. However, if the assets are located at different locations, in particular at different plants, the use of the cloud service is preferred. While the local execution in a controller of an asset is limited by the computational power of the controller, in principal a huge number of different algorithms can be used in parallel for the same asset in the cloud. Alternatively, a local setup can be used similar to the cloud service avoiding computational burden on the controller. The local setup preferably comprises a dedicated controller for the asset fleet like an industrial PC. In addition, the local setup and the cloud service can be combined for a hybrid approach.

Preferably, the specific condition model is determined dependent on criteria, like asset type, application and/or customer.

Preferably, the anomaly is identified an anomaly detection method, which is configured for processing timeseries data and/or event data, further preferably an autoencoder, in particular a stacked autoencoder. Preferably, identifying the anomaly comprises annotating anomalies with failure cases. Thus, the determination of the specific condition model is simplified and/or structured.

Preferably, the specific condition model comprises a plurality of specific condition models each relating to a specific failure case. However, a single specific condition model relating to different specific failure cases is also possible.

Preferably, the specific condition model is used in a monitoring manner with the assets, in particular for monitoring alarms and/or key performance indicators, preferably by technical experts. Furthermore, with the digital models of the assets, the same specific condition model is used for predictive maintenance, for example sending a technical expert if a failure is predicted, and/or for root cause analysis.

Preferably, the identification of anomalies in the received local condition data is done fully automatically.

By iteratively identifying new potential failure cases and determining a specific condition model for predicting the new potential failure case, the asset condition monitoring method is improved. In other words, the asset condition monitoring method evolves from a standardized method, which only knows generic potential failure cases to a highly specified method, which can identify asset specific potential failure cases. Thus, the asset condition monitoring method can not only detect if there is a failure, but also, which specific failure case is present.

Using local condition data from an asset fleet compared to just a single asset, thereby considering a whole asset system, in particular a whole production line, improves the extensibility and/or updatability of the asset condition monitoring method.

Preferably, receiving the local condition data comprises automatically collecting data, in particular through physical signals, and/or collecting asset feedback from a user.

In other words, if the existing specific condition models are not able to predict a current condition and/or health state of the asset correctly, an anomaly in the received local condition data is detected. Therefore, preferably, a test is run on each of the available specific condition models and the result of the tests are compared with the provided local condition data. Thus, machine learning methods, in particular anomaly detection methods, and/or, artificial intelligence methods dependent on local condition data of an asset fleet can be employed.

The results of the tests are preferably triggered by time-calculation, in particular every hour, triggered every time a specific condition monitoring cycle was executed, calculated as a stream, in particular using a stream analytics calculation engine, and/or calculated as a batch, in particular for on demand analysis.

Preferably, identifying at least one anomaly comprises running a generic test. The generic test identifies the anomaly and/or prepares the anomaly for determining the new specific failure case.

Thus, an improved asset condition monitoring method is provided.

In a preferred embodiment, identifying anomalies in the received local condition data comprises classifying identified failure cases and/or isolating faults in the identified anomaly.

Thus, an improved asset condition monitoring method is provided.

In a preferred embodiment, the local condition data comprise asset part specific data, preferably an acceleration of an asset part, a speed of an asset part, a position of an asset part, a torque of an asset part, vibration of an asset part, a current of an asset part, a voltage of an asset part, a live estimation of friction used in a drive line and/or drive system of an asset part, and/or a flow of dispensed materials fluids and/or gases of an asset part, in particular glue, wire, paint and/or inert gas.

For example, the asset is an industrial robot for a production line and an asset part is the gearbox of an axis of the robot.

Thus, an improved asset condition monitoring method is provided.

Preferably, the method comprises the step of validating the specific condition model dependent on a machine learning algorithm, thereby determining validation data.

Preferably, the specific condition model is trained, developed, tested and/or validated by the machine learning algorithm using the local condition data, in particular historical condition data.

Preferably, the machine learning algorithm comprises (logistic) regression, a support vector machine and/or a neuronal network, in particular a deep neuronal network.

Preferably, the machine learning algorithm comprises transfer learning approaches to simplify training models on fleet configurations and to allow model transformation over time.

Thus, an improved asset condition monitoring method is provided.

Preferably, the method comprises the steps of adjusting the specific condition model dependent on the validation data, at least until a predetermined performance is met and providing the specific condition model to the plurality of assets and/or to the digital models of the plurality of assets, if the specific condition model meets the predetermined performance.

The term "performance", as used herein, comprises a reliability and/or an accuracy of the specific condition model.

Preferably, edge analysis is used for adjusting the specific condition model, thereby discarding unnecessary data.

Thus, an improved asset condition monitoring method is provided.

In a preferred embodiment, the method comprises the steps of receiving additional system data from the plurality of assets, wherein the additional system data potentially have impact on the condition of the respective asset and identifying the new potential failure case dependent on the determined anomaly and the received system data.

Thus, an improved asset condition monitoring method is provided.

In a preferred embodiment the system data comprises environmental data, preferably from a motor of the asset, a simulation tool, a model of the asset, sensor data, preferably sound data and/or temperature data, an asset setup and/or an additional system, preferably production planning systems.

Thus, an improved asset condition monitoring method is provided.

In a preferred embodiment, the method comprises the step of combining specific condition models relating to different potential failure cases for failure case isolation, wherein potential failure cases of one part of an asset are transferred to a second part of the asset, which is similar to the first part of the asset.

For example, a specific condition model relating to a first axis can be combined with a specific condition model relating to a second axis, which is similar to the first axis. Thus, potential failure cases of one part of an asset can be transferred to a second part of an asset.

Thus, an improved asset condition monitoring method is provided.

In a preferred embodiment, the specific condition model replaces an existing specific condition model.

Preferably, improved specific condition models replace existing specific condition models in order to iteratively improve the specific condition models. However, a newly determined and/or provided specific condition model can also just be added to the existing specific condition models to increase the variety of specific condition models.

Thus, an improved asset condition monitoring method is provided.

In a preferred embodiment, the method comprises the step of indicating the new potential failure case of the asset and/or predicting the new potential failure case of the asset dependent on the provided specific condition model.

Preferably, the indication and/or prediction is visualised by key performance indicators, a heatmap and/or a traffic light system.

Thus, an improved asset condition monitoring method is provided.

According to an aspect, a device is provided, configured for executing a method, as described herein.

According to an aspect, a computer program is provided, comprising instructions which, when the program is executed by a computer, cause the computer to carry out the method, as described herein.

According to an aspect, a computer-readable data carrier is provided, having stored there on the computer program, as described herein.

The present invention also relates to a computer program product including computer program code for controlling one or more processors of a device adapted to be connected to a communication network and/or configured to store a standardized configuration representation, particularly, a computer program product including a computer readable medium containing therein the computer program code.

### BRIEF DESCRIPTION OF THE DRAWINGS

The subject matter of the invention will be explained in more detail in the following text with reference to preferred exemplary embodiments, which are illustrated in the attached drawings, in which:
Fig.1 shows a schematic view of a condition monitoring arrangement with a device for asset condition monitoring with automatic anomaly detection;
Fig. 2 shows a schematic view of an asset condition monitoring method with automatic anomaly detection; and
Fig. 3 shows a detailed schematic view of an analytic unit.

The reference symbols used in the drawings, and their meanings, are listed in summary form in the list of reference symbols. In principle, identical parts are provided with the same reference symbols in the figures.

### DETAILED DESCRIPTION OF PREFERRED EMBODIMENTS

Preferably, the functional modules and/or the configuration mechanisms are implemented as programmed software modules or procedures, respectively; however, one skilled in the art will understand that the functional modules and/or the configuration mechanisms can be implemented fully or partially in hardware.

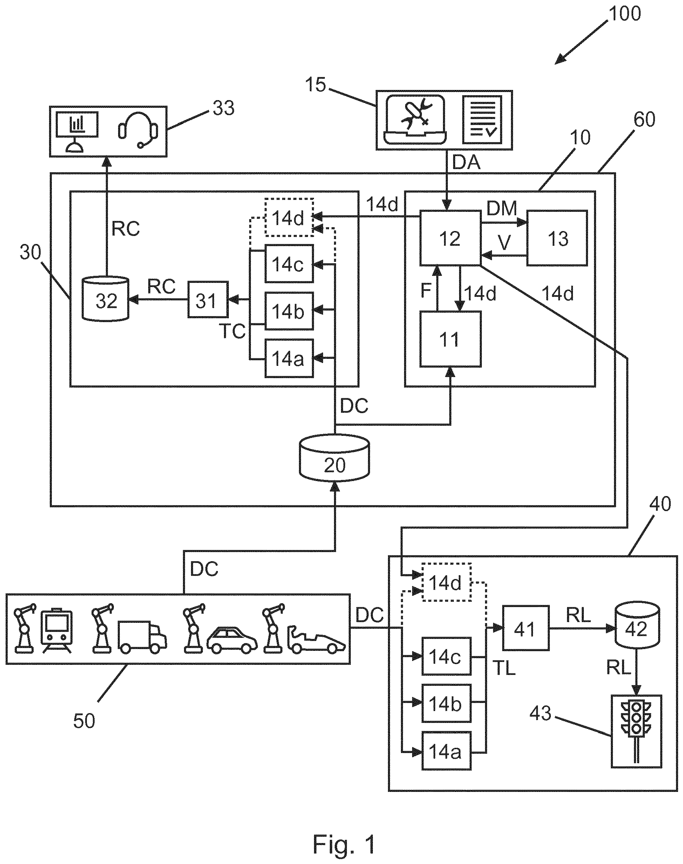

Fig.1 shows a schematic view of a condition monitoring arrangement 100 comprising a device 10, a database 20, cloud testing unit 30, a local testing unit 40, an asset fleet 50 and a cloud 60. The device 10, the database and the cloud testing unit 30 all run in the cloud 60.

The asset fleet 50, in this example, comprises a plurality of assets, in this case robots for producing different vehicles like trains, trucks, cars and/or sport cars. The condition of the assets is monitored and thereby local condition data DC is determined, relating to the condition of each of the robots. The local condition data DC is collected in the database 20. From there, the local condition data DC is provided to the device 10. The device 10 comprises an analytic unit 11, a model unit 12 and a machine learning unit 13. The analytic unit 11 receives the local condition data DC. Dependent on the local condition data DC, the analytic unit identifies an anomaly A in the local condition data DC and dependent on the anomaly A identifies a new potential failure case F. The anomaly A in this case relates to an unknown failure of a robot in the local condition data DC. By analysing the anomaly A, in particular in view of additional system data (not shown) provided by the respective robot, in this case the setup of the robot, the failure case F can be identified. For example, the failure case F describes a failure in the gearbox of axis 3 of the robot.

The new potential failure case F is then provided to the model unit 12, which is configured for determining a new specific condition model 14d dependent on the identified new potential failure case F, wherein the new specific condition model 14d is configured for predicting the new potential failure case F. However, the new specific condition model 14d does not yet meet predetermined performance criteria, in other word, the specific condition model 14d does not predict a condition problem and/or a failure of the robot in a reliable or accurate way. Therefore, model data DM relating to the new specific condition model 14d is provided to the machine learning unit 13. Based on machine learning algorithms, the machine learning unit 13 validates the model data DM and therefore the specific condition model 14d, thereby determining validation data V. Based on the validation data V, the model unit 12 adjusts the new specific condition model 14d. This iteration between the model unit 12 and the machine learning unit 13 is repeated until the specific condition model 14 does meet the predetermined performance criteria. The iteration process in this example is supervised by analysts 15, which provide analyst data DA, to improve the iteration process between the model unit 12 and the machine learning unit 13.

The specific condition model 14 is then provided back to the analytic unit 11. The analytic unit 11 is thereby improved by a new way to identify a specific failure of one of the assets based on the local condition data DC.

Additionally, the new specific condition model 14d is provided to the cloud testing unit 30. The cloud testing unit 30 comprises already known specific condition models 14b and 14c as well as a generic condition model 14a. The generic condition model 14a can only make a statement about a robot if a failure is predicted or not, but cannot specify the failure. The known specific models 14b and 14c can detect specific failures, in this case a failure relating to a screw and a failure relating to a motor of the robot. Based on the local condition data DC each test can provide cloud test results TC, which are processed by an cloud fault isolation unit 31. The cloud fault isolation unit 31 provides cloud results RC to a cloud result database 32. From there, the cloud results RC can be provided to consumers 33, in this case clients, which want to know a prediction of condition failures of the processed asset fleet 50. Since the device 10 has provided the new specific condition model 14d, it is also possible to predict failures specifically in axis 3 of the robot.

The same applies to the local testing unit 40. The new specific condition model 14d is provided to the local testing unit 14. In this application, the condition models 14a, 14b, 14c and 14d do not try to predict a future failure of a robot, but indicate already existing failures of specific robots. Therefore, the condition models 14a, 14b, 14c and 14d provide local test results TL, which are provided to a local fault isolation unit 41. The local fault isolation unit 41 provides local results RL to a local result database 43. From there, the local test results TL are provided to a condition display device 43, in this case in form of a traffic light, indicating the failure of a robot. Based on the new condition model 14d, a failure specifically in axis 3 of the specific robot can be detected and indicated.

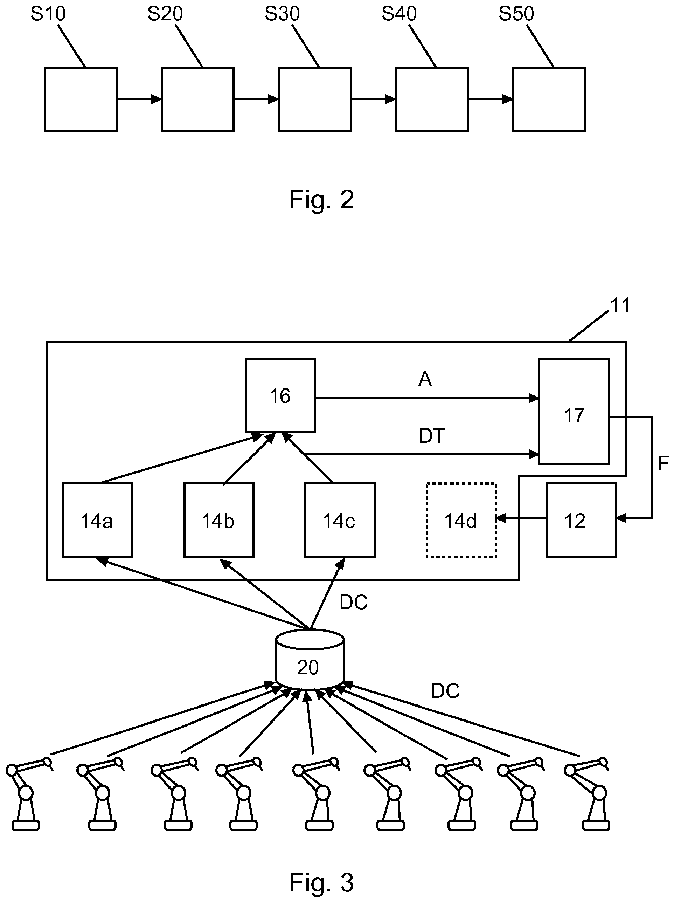

Fig. 2 shows a schematic view of an asset condition monitoring method with automatic anomaly detection. In step S10 local condition data DC are received from a fleet 50 of assets. In step S20 anomalies A are identified in the received local condition data DC. In step S30, a new potential failure case F is identified dependent on the identified anomaly A. In step S40, a specific condition model 14d is determined dependent on the identified new potential failure case F, wherein the specific condition model 14d is configured for predicting the new potential failure case F. In step S50, the specific condition model 14d is provided to the plurality of assets and/or to digital models of the plurality of assets.

Fig. 3 shows a detailed schematic view of the analytic unit 11. The analytic unit 11 comprises an anomaly identification unit 16 and a failure case identification unit 17. In this example, the analytic unit 11 already knows the generic condition model 14a and the specific condition models 14b and 14c, as described in the cloud testing unit 30 of Fig. 1. Based on the condition models 14a, 14b, 14c, test data DT is provided to the identification unit 16. If the generic condition model 14a provides test data DT, which indicate a failure, but the specific condition models 14b, 14c do not indicate a failure, an anomaly A is determined. In this case, there is a failure in axis 3 of the robot, which cannot be identified by the generic condition model 14a and the specific condition model 14b, 14c. Based on the anomaly A and the test data DT, the failure case identification unit 17 identifies a new failure case F. Based on the failure case F, the model unit 12 determines a new specific condition model 14d, which is then provided back to the analytic unit 11. The analytic process of the model unit 12 is supervised by the analyst 15. The analyst 15 is involved in the analytic process and provides analyst data DA to the model unit 12. The model unit 12 thus determines the new specific condition model 14d based on the failure case F and the analyst data DA. Thus, in the future, a failure in axis 3 of the robot can be identified by the analytic unit 11 based on the new specific condition model 14d. Thus, the device for condition monitoring can be iteratively improved.

### LIST OF REFERENCE SYMBOLS

- 10: device
- 11: analytic unit
- 12: model unit
- 13: machine learning unit
- 14a: generic condition model
- 14b: specific condition model
- 14c: specific condition model
- 14d: new specific condition model
- 15: analyst
- 16: anomaly identification unit
- 17: failure case identification unit

- 20: database

- 30: cloud testing unit
- 31: cloud fault isolation unit
- 32: cloud result database
- 33: consumer

- 40: local testing unit
- 41: local fault isolation unit
- 42: local result database
- 43: condition display device

- 50: asset fleet

- 60: cloud

- 100: condition monitoring arrangement

- DC: local condition data
- V: validation data
- DM: model data
- DA: analyst data
- A: anomaly
- F: failure case
- TC: cloud test result
- RL: cloud result
- TL: local test result
- RL: local result
- TD: test data

## Claims

1. Asset condition monitoring method with automatic anomaly detection, comprising the steps:
receiving (S10) local condition data (DC) from an asset fleet (50), relating to a plurality of assets; wherein the local condition data (DC) relate to a condition of an asset of the asset fleet (50), wherein the local condition data comprise time series data of the condition of the asset of the asset fleet (50);
the method being **characterized in** the steps of:
identifying (S20) at least one anomaly (A) in the received condition data (DC), wherein the identified anomaly (A) relates to unexpected condition data of the asset; wherein the anomaly is identified by an anomaly detection method, which is configured for processing the time series data comprising running a generic test that identifies the anomaly;
identifying (S30) a new potential failure case (F), relating to a new failure in an asset, dependent on the identified anomaly (A) and additional system data provided by the respective asset;
determining (S40) a specific condition model (14d) dependent on the identified new potential failure case (F), wherein the specific condition model (14d) is configured for predicting the new failure; and
providing (S50) the specific condition model (14d) to the plurality of assets and/or to digital models of the plurality of assets.

2. Method of claim 1, wherein
identifying at least one anomaly (A) in the received local condition data (DC) comprises classifying identified failure cases and/or isolating faults in the identified anomaly (A).

3. Method of any of the preceding claims, wherein
the local condition data (DC) comprise asset part specific data, preferably an acceleration of an asset part, a speed of an asset part, a position of an asset part, a torque of an asset part, vibration of an asset part, a current of an asset part, a voltage of an asset part, a live estimation of friction used in a drive line and/or drive system of an asset part, and/or a flow of dispensed materials fluids and/or gases of an asset part, in particular glue, wire, paint and/or inert gas.

4. Method of any of the preceding claims, comprising the steps:
receiving additional system data from the plurality of assets, wherein the additional system data potentially have impact on the condition of the respective asset; and
identifying the new potential failure case (F) dependent on the determined anomaly (A) and the received system data.

5. Method of claim 4, wherein
the system data comprises environmental data, preferably a motor of the asset, a simulation tool, a model of the asset, sensor data, preferably sound data and/or temperature data, an asset setup and/or an additional system, preferably production planning systems.

6. Method of any of the preceding claims, comprising the step:
combining specific condition models (14b, 14c, 14d) relating to different potential failure cases for failure case isolation, wherein potential failure cases of one part of an asset are transferred to a second part of the asset, which is similar to the first part of the asset.

7. Method of any of the preceding claims, wherein
the determined specific condition model (14d) replaces existing specific condition models.

8. Method of any of the preceding claims, comprising the steps:
indicating the new potential failure case (F) of the asset and/or predicting the new potential failure case (F) of the asset dependent on the provided specific condition model (14d).

9. Device (10), configured to execute a method of any of claims 1 to 8.

10. Computer program, comprising instructions which, when the program is executed by a computer, cause the computer to carry out the method of any of claims 1 to 8.

11. Computer-readable data carrier, having stored there on the computer program of claim 10.

## Patentansprüche

1. Wirtschaftsgutzustands-Überwachungsverfahren mit automatischer Anomaliedetektion, das die folgenden Schritte umfasst:
Empfangen (S10) lokaler Zustandsdaten (DC) von einer Wirtschaftsgutflotte (50) bezüglich mehrerer Wirtschaftsgüter, wobei sich die lokalen Zustandsdaten (DC) auf einen Zustand eines Wirtschaftsguts der Wirtschaftsgutflotte (50) beziehen, wobei die lokalen Zustandsdaten Zeitreihendaten des Zustands des Wirtschaftsguts der Wirtschaftsgutflotte (50) umfassen;
wobei das Verfahren durch die folgenden Schritte gekennzeichnet ist:
Identifizieren (S20) wenigstens einer Anomalie (A) in den empfangenen Zustandsdaten (DC), wobei sich die identifizierte Anomalie (A) auf unerwartete Zustandsdaten des Wirtschaftsguts bezieht, wobei die Anomalie durch ein Anomaliedetektionsverfahren identifiziert wird, das zum Verarbeiten der Zeitreihendaten konfiguriert ist, die einen laufenden generischen Test umfassen, der die Anomalie identifiziert;
Identifizieren (S30) eines neuen potentiellen Störungsfalls (F) bezüglich einer neuen Störung in einem Wirtschaftsgut abhängig von einer identifizierten Anomalie (A) und zusätzlichen Systemdaten, die durch das jeweilige Wirtschaftsgut bereitgestellt werden;
Bestimmen (S40) eines spezifischen Zustandsmodells (14d) abhängig von dem identifizierten neuen potentiellen Störungsfall (F), wobei das spezifische Zustandsmodell (14d) zum Vorhersagen der neuen Störung konfiguriert ist; und
Bereitstellen (S50) des spezifischen Zustandsmodells (14d) für die mehreren Wirtschaftsgüter und/oder für digitale Modelle der mehreren Wirtschaftsgüter.

2. Verfahren nach Anspruch 1, wobei
das Identifizieren wenigstens einer Anomalie (A) in den empfangenen lokalen Zustandsdaten (DC) Klassifizieren identifizierter Störungsfälle und/oder Isolieren von Störungen in der identifizierten Anomalie (A) umfasst.

3. Verfahren nach einem der vorhergehenden Ansprüche, wobei
die lokalen Zustandsdaten (DC) spezifische Wirtschaftsgutteil-Daten, vorzugsweise eine Beschleunigung eines Wirtschaftsgutteils, eine Geschwindigkeit eines Wirtschaftsgutteils, eine Position eines Wirtschaftsgutteils, ein Drehmoment eines Wirtschaftsgutteils, eine Schwingung eines Wirtschaftsgutteils, einen Strom eines Wirtschaftsgutteils, eine Spannung eines Wirtschaftsgutteils, eine Live-Schätzung einer in einem Triebstrang und/oder Antriebssystem eines Wirtschaftsgutteils verwendeten Reibung und/oder eine Strömung verteilter Materialfluide und/oder -gase eines Wirtschaftsgutteils, insbesondere Klebstoff, Draht, Farbe und/oder Inertgas umfassen.

4. Verfahren nach einem der vorhergehenden Ansprüche, das die folgenden Schritte umfasst:
Empfangen zusätzlicher Systemdaten von den mehreren Wirtschaftsgütern, wobei die zusätzlichen Systemdaten potentiell eine Auswirkung auf den Zustand des jeweiligen Wirtschaftsguts aufweisen, und
Identifizieren des neuen potentiellen Störungsfalls (F) abhängig von der bestimmten Anomalie (A) und den empfangenen Systemdaten.

5. Verfahren nach Anspruch 4, wobei
die Systemdaten Umweltdaten, vorzugsweise einen Motor des Wirtschaftsguts, ein Simulationswerkzeug, ein Modell des Wirtschaftsguts, Sensordaten, vorzugsweise Tondaten und/oder Temperaturdaten, einen Aufbau des Wirtschaftsguts und/oder ein zusätzliches System, vorzugsweise Produktionsplanungssysteme umfasst.

6. Verfahren nach einem der vorhergehenden Ansprüche, das den folgenden Schritt umfasst:
Kombinieren spezifischer Zustandsmodelle (14b, 14c, 14d) bezüglich verschiedener potentieller Störungsfälle für die Störungsfallisolation, wobei die potentiellen Störungsfälle eines Teils eines Wirtschaftsguts zu einem zweiten Teil des Wirtschaftsguts übertragen werden, der zu dem ersten Teil des Wirtschaftsguts ähnlich ist.

7. Verfahren nach einem der vorhergehenden Ansprüche, wobei
das bestimmte spezifische Zustandsmodell (14d) vorhandene spezifische Zustandsmodelle ersetzt.

8. Verfahren nach einem der vorhergehenden Ansprüche, das die folgenden Schritte umfasst:
Angeben des neuen potentiellen Störungsfalls (F) des Wirtschaftsguts und/oder Vorhersagen des neuen potentiellen Störungsfalls (F) des Wirtschaftsguts abhängig von dem bereitgestellten spezifischen Zustandsmodell (14d).

9. Vorrichtung (10), die konfiguriert ist, ein Verfahren nach einem der Ansprüche 1 bis 8 auszuführen.

10. Computerprogramm, das Anweisungen umfasst, die, wenn das Programm durch einen Computer ausgeführt wird, den Computer veranlassen, das Verfahren nach einem der Ansprüche 1 bis 8 auszuführen.

11. Computerlesbarer Datenträger, der das Computerprogramm nach Anspruch 10 darin gespeichert aufweist.

## Revendications

1. Procédé de surveillance d'état d'actifs avec détection automatique des anomalies, le procédé comprenant les étapes suivantes :
recevoir (S10) des données d'état locales (DC) d'un parc d'actifs (50), concernant une pluralité d'actifs, où les données d'état locales (DC) concernent l'état d'un actif du parc d'actifs (50), les données d'état locales comprenant des données de séries temporelles de l'état de l'actif du parc d'actifs (50) ;
le procédé étant **caractérisé par** les étapes suivantes :
identifier (S20) au moins une anomalie (A) dans les données d'état reçues (DC),
où l'anomalie identifiée (A) concerne des données d'état inattendues de l'actif, où l'anomalie est identifiée par un procédé de détection d'anomalie, qui est configuré pour traiter les données de série temporelle comprenant l'exécution d'un test générique qui identifie l'anomalie ;
identifier (S30) un nouveau cas de défaillance potentielle (F), relatif à une nouvelle défaillance d'un actif, en fonction de l'anomalie identifiée (A) et des données système supplémentaires fournies par l'actif respectif ;
déterminer (S40) un modèle d'état spécifique (14d) dépendant du nouveau cas de défaillance potentielle identifié (F), où le modèle d'état spécifique (14d) est configuré pour prédire la nouvelle défaillance ; et
fournir (S50) le modèle d'état spécifique (14d) à la pluralité d'actifs et/ou aux modèles numériques de la pluralité d'actifs.

2. Procédé selon la revendication 1, dans lequel :
l'identification d'au moins une anomalie (A) dans les données d'état locales reçues (DC) comprend la classification des cas de défaillance identifiés et/ou l'isolation des défauts dans l'anomalie identifiée (A).

3. Procédé selon l'une quelconque des revendications précédentes, dans lequel :
les données d'état locales (DC) comprennent des données spécifiques à l'élément d'actif, de préférence une accélération d'un élément d'actif, une vitesse d'un élément d'actif, une position d'un élément d'actif, un couple d'un élément d'actif, une vibration d'un élément d'actif, un courant d'un élément d'actif, une tension d'un élément d'actif, une estimation en temps réel du frottement utilisé dans une ligne d'entraînement et/ou un système d'entraînement d'un élément d'actif, et/ou un flux de fluides ou de gaz de matériaux distribués d'un élément d'actif, en particulier de la colle, du fil, de la peinture et/ou du gaz inerte.

4. Procédé selon l'une quelconque des revendications précédentes, le procédé comprenant les étapes suivantes :
recevoir des données système supplémentaires de la part de la pluralité d'actifs, où les données système supplémentaires ont un impact potentiel sur l'état de l'actif respectif ; et
identifier le nouveau cas de défaillance potentielle (F) en fonction de l'anomalie déterminée (A) et des données système reçues.

5. Procédé selon la revendication 4, dans lequel :
les données du système comprennent des données environnementales, de préférence un moteur de l'actif, un outil de simulation, un modèle de l'actif, des données de capteur, de préférence des données sonores et/ou des données de température, une configuration de l'actif et/ou un système supplémentaire, de préférence des systèmes de planification de la production.

6. Procédé selon l'une quelconque des revendications précédentes, le procédé comprenant l'étape suivante :
combiner des modèles d'état spécifiques (14b, 14c, 14d) relatifs à différents cas de défaillance potentiels pour isoler les cas de défaillance, les cas de défaillance potentiels d'une partie d'un actif étant transférés à une deuxième partie de l'actif, qui est similaire à la première partie de l'actif.

7. Procédé selon l'une quelconque des revendications précédentes, dans lequel :
le modèle d'état spécifique déterminé (14d) remplace les modèles d'état spécifiques existants.

8. Procédé selon l'une quelconque des revendications précédentes, le procédé comprenant l'étape suivante :
indiquer le nouveau cas de défaillance potentiel (F) de l'actif et/ou prédire le nouveau cas de défaillance potentiel (F) de l'actif en fonction du modèle d'état spécifique fourni (14d).

9. Dispositif (10) configuré pour exécuter un procédé selon l'une quelconque des revendications 1 à 8.

10. Programme d'ordinateur comprenant des instructions qui, lorsque le programme est exécuté par un ordinateur, amènent l'ordinateur à exécuter le procédé de l'une quelconque des revendications 1 à 8.

11. Support de données lisible par ordinateur, sur lequel est stocké le programme d'ordinateur de la revendication 10.
